Europäisches Patentamt

European Patent Office

Office européen des brevets

(11) Numéro de publication: **0 045 703**
A1

## (12) DEMANDE DE BREVET EUROPEEN

(21) Numéro de dépôt: 81401296.9

(22) Date de dépôt: 12.08.81

(51) Int. Cl.³: **A 01 K 1/02**

(30) Priorité: 12.08.80 FR 8018023

(43) Date de publication de la demande:
10.02.82 Bulletin 82/6

(84) Etats contractants désignés:
AT BE CH DE FR GB IT LI NL SE

(71) Demandeur: Pencole, Gérard Paul Joseph
Bostarju
F-56490 Meneac(FR)

(72) Inventeur: Pencole, Gérard Paul Joseph
Bostarju
F-56490 Meneac(FR)

(74) Mandataire: Martin, Jean-Jacques et al,
Cabinet REGIMBEAU 26, Avenue Kléber
F-75116 Paris(FR)

(54) Cage de mise-bas pour truie attachée.

(57) La présente invention concerne les dispositifs du type "cage de mise-bas" destinés à immobiliser une truie, particulièrement pendant la période d'allaitement.

Il s'agit d'une cage du type comportant un bâti de cage fixe (1) et deux côtés basculants (8a, 8b) formant barrière de protection et montés chacun à pivotement autour d'un axe horizontal (AA', BB') entre une position extrême verticale et une position extrême inclinée, caractérisée par le fait que l'axe de pivotement (AA', BB') est situé dans la région centrale par rapport à la hauteur verticale du côté basculant (8a, 8b).

Application à l'élevage industriel des porcs.

Fig:1

Croydon Printing Company Ltd.

## CAGE DE MISE-BAS POUR TRUIE ATTACHEE

La présente invention concerne un dispositif du type cage de mise-bas pour truie attachée, destiné à l'élevage industriel des porcs.

Les cages de mise-bas sont utilisées pour la mise-bas des truies et ensuite pendant la période d'allaitement des porcelets pour imposer à la truie une immobilité relative compatible avec les exigences de l'élevage industriel et pour garantir la sécurité des porcelets pendant la période d'allaitement. Cette sécurité est essentielle du fait que la faible taille des porcelets à la naissance, par rapport à la taille de leur mère, constitue un handicap dans la mesure où les risques d'écrasement ou d'étouffement des porcelets par leur mère sont importants.

Pour tenter de résoudre ce problème, on a d'abord conçu des cages rigides et relativement exigues pour imposer à la truie l'immobilité relative requise.

Le principal inconvénient de telles cages est que leur largeur n'est pas toujours adaptée à la taille et à la mobilité de l'animal. Ainsi, quand la truie est debout, la largeur de la cage est supérieure à la largeur qu'il est nécessaire de lui accorder et, quand la truie est couchée, l'accès des porcelets aux mamelles de la truie est entravé par le bas côté de la cage. Lorsque la truie passe de la position debout à la position couchée, celle-ci est obligée de s'affaisser avant de se tourner au fond de la cage en position d'allaitement. Cette manoeuvre, rendue difficile par l'exiguité de la cage et la rigidité de ses parois est mal contrôlée par la truie dont l'affaissement entraîne fréquemment l'écrasement des porcelets qui, surpris sous le ventre de leur mère, n'ont pas toujours le temps de s'en éloigner.

Pour améliorer cette situation, on a également proposé des cages comportant un bâti fixe et deux côtés basculants formant barrière de protection et montée chacun à pivotement autour d'un axe horizontal entre une position extrême verticale et une position extrême inclinée.

Une cage de ce genre est décrite par exemple dans le brevet US 3 106 188.

Dans la cage décrite dans ce brevet antérieur, les côtés basculants sont montés pivotants à leur partie supérieure et l'axe de pivotement se situe à une hauteur élevée de l'ordre de la hauteur de la truie.

Cette cage connue présente un certain nombre d'inconvénients. Ainsi, même en position inclinée, les côtés basculants n'offrent pas une hauteur suffisante entre le sol et la partie inférieure de ses côtés pour favoriser l'accès des porcelets aux mamelles de la truie.

De plus, les deux côtés basculants sont soumis chacun à l'action d'un ressort de rappel tendant à rappeler le côté basculant considéré vers sa position verticale. Il en résulte que l'animal se trouve pris entre les deux côtés basculants de la cage et gêné spécialement pour se déplacer d'une position couchée à une position debout.

La présente invention vise à éliminer les inconvénients des cages de mise-bas de la technique antérieure en proposant une cage de mise-bas, du type comportant un bâti de cage fixe et deux côtés basculants formant barrière de protection et montés chacun à pivotement autour d'un axe horizontal entre une position extrême verticale et une position extrême inclinée, dans laquelle l'axe de pivotement est situé dans la région centrale par rapport à la hauteur verticale du côté basculant.

De façon préférentielle, l'axe de pivotement est situé sensiblement au deux tiers de la hauteur verticale du côté basculant, en partant de l'extrémité inférieure dudit côté.

L'axe de pivotement est situé avantageusement, par rapport au sol de la cage, à une hauteur voisine de la mi-hauteur de la truie.

Il en résulte que la hauteur disponible entre le sol et la partie inférieure d'un côté basculant augmente très sensiblement lorsque ce côté passe d'une position verticale à une position inclinée, ce qui facilite grandement l'accès des porcelets aux mamelles de leur mère.

Chaque côté basculant est avantageusement relié à un amortisseur à effets dissymétriques pour ralentir le mouvement de pivotement du côté basculant de la position verticale à la position inclinée, sans ralentir le mouvement de pivotement inverse.

Cette caractéristique de la cage de l'invention permet à la truie de s'affaisser lentement en laissant le temps aux porcelets de s'écarter de leur mère, sans entraver le mouvement inverse de la truie lorsqu'elle désire se relever.

L'amortisseur précité est avantageusement un vérin hydraulique dont la tige est articulée sur un bras de levier solitaire du côté basculant correspondant.

D'autres caractéristiques et avantages de l'invention seront mieux compris à la lecture de la description qui va suivre et qui se réfère aux dessins annexés sur lesquels :

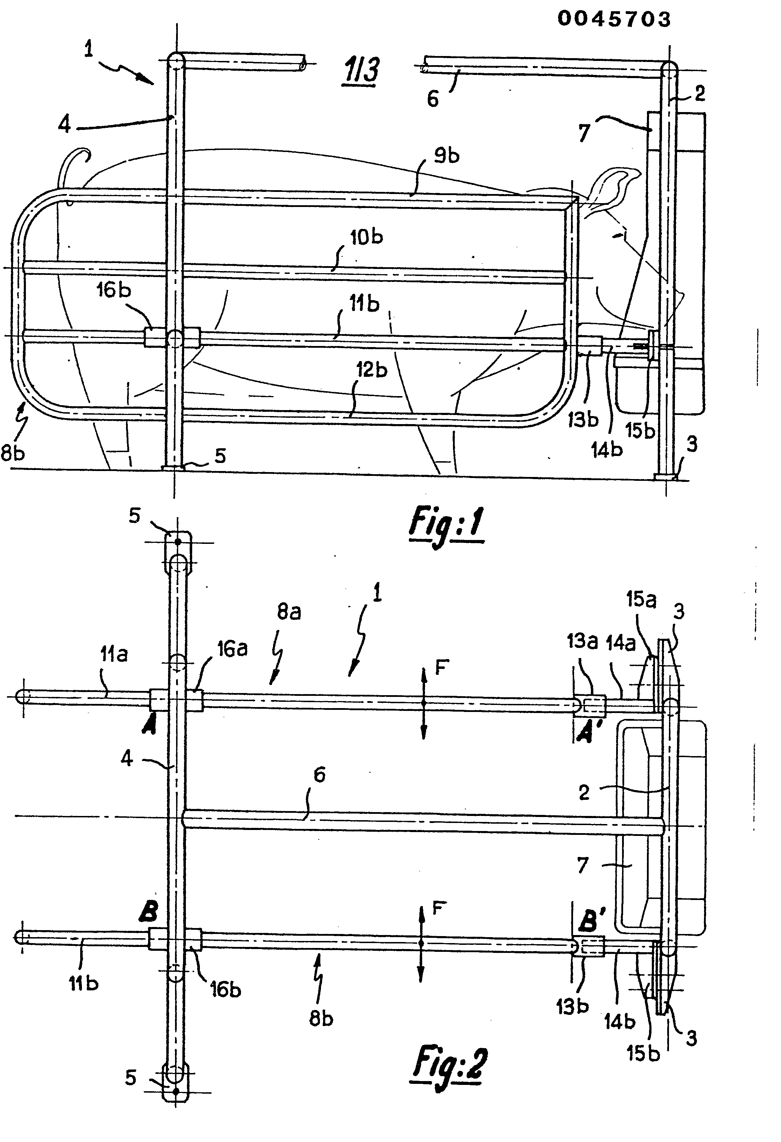

. la figure 1 est une vue de profil d'unecage de mise-bas selon l'invention ;

. la figure 2 est une vue de dessus de la cage de la figure 1 ;

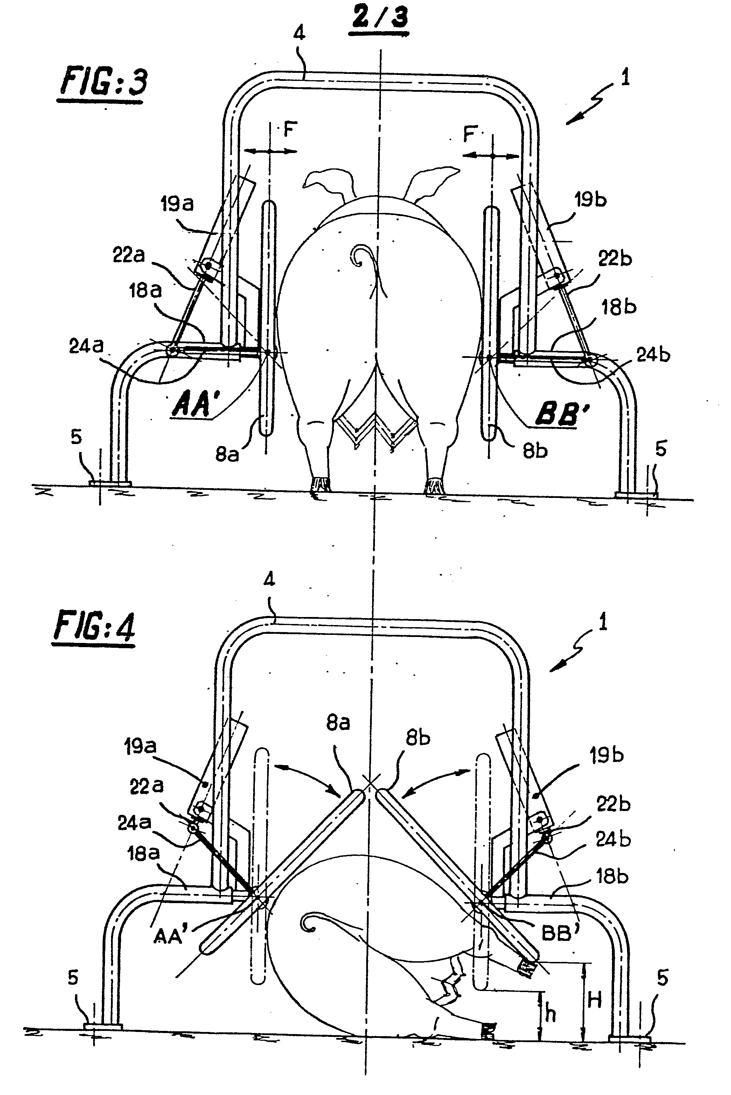

. La figure 3 est une vue arrière de la cage des figures 1 et 2, les côtés basculants étant en position verticale ;

. la figure 4 est une vue correspondante à la figure 3, dans laquelle les côtés basculants sont en position inclinée ; et

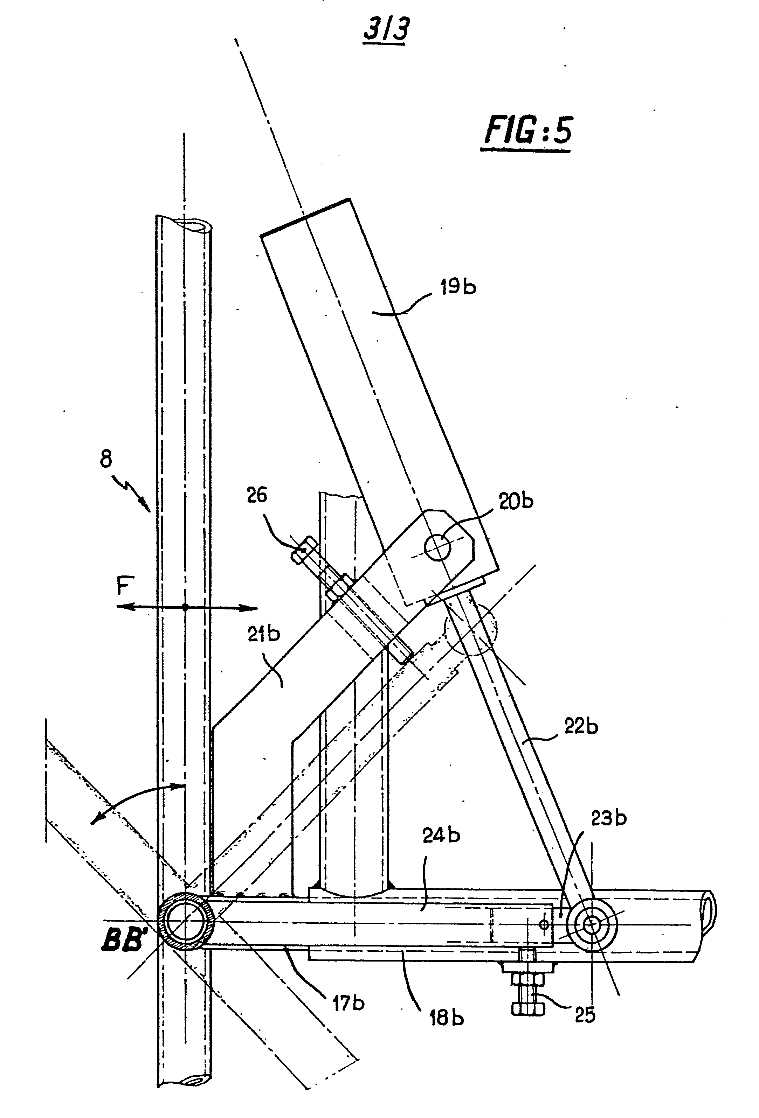

. la figure 5 est une vue de détail de la figure 3 montrant l'articulation réglable d'un côté basculant muni de son amortisseur.

La cage pour truie attachée représentée sur les figures annexées comporte, un bâti fixe 1 constitué par un arceau avant 2 dont les deux pieds 3 sont fixés au sol et par un arceau arrière 4 dont les deux pieds 5 sont fixés au sol, les arceaux 2 et 4 étant reliés à leur partie supérieure par une barre horizontale 6. Le bâti fixe 1 est réalisé en tubes soudés et est fixé au sol, l'arceau avant 2 supportant une mangeoire 7 destinée à l'alimentation de la truie attachée à l'intérieur de la cage.

Le bâti fixe 1 est muni de deux côtés basculants 8a et 8b, formant barrière de protection, et montés chacun à pivotement autour d'un axe horizontal, respectivement AA' et BB'. Comme on peut le constater sur la figure 1, le côté basculant 8b est réalisé en tubes soudés et comporte quatre barreaux parallèles 9b, 10b, 11b, et 12bsitués sensiblement à égale distance les uns des autres, l'articulation se faisant autour du barreau 11b;Il en résulte que l'axe de pivotement BB' du côté 8b est situé dans la région centrale par rapport à la hauteur verticale du côté basculant 8b, et plus précisément, sensiblement au tiers de la hauteur verticale du côté basculant, en partant de l'extrémité inférieure (barreau 12b)dudit côté. Bien entendu, le côté basculant 8a est l'homologue symétrique du côté basculant 8b.

Les côtés basculants 8a et 8b sont munis respectivement d'une douille 13a et 13b coopérant respectivement avec des pivots 14a et 14b supportés par des platines 15a et 15b. Ces platines 15a et 15b sont montées réglables en position sur l'arceau avant 2 au moyen de vis de pression indésserrables, de manière à pouvoir modifier à volonté l'écartement entre les deux pivots 14a et 14b.

Les barreaux 11a et 11b des côtés basculants 8a et 8b pivotent respectivement à l'intérieur d'un manchon 16a ou 16b, fixé à un tube 17a ou 17b monté coulissant à l'intérieur d'une portion de tube horizontale 18a ou 18b formant partie de l'arceau arrière 4. Le tube 17a ou 17b peut être immobilisé en position à l'intérieur de la portion de tube 18a ou 18b correspondante au moyen d'une vis de pression indésserrable.

Les moyens précités permettent de régler l'écartement des deux côtés basculants 8a et 8b en fonction de la taille de la truie placée à l'intérieur de la cage. Le réglage de l'écartement se fera la truie étant en position debout ( cf.figures 1 et 3).

Les axes de pivotement AA' et BB' sont situés, par rapport au sol de la cage, à une hauteur voisine de la mi-hauteur de la truie, c'est-à-dire à une hauteur supérieure à celle d'un porcelet à sa naissance. Les possibilités de réglage de l'écartement entre les côtés basculants 8a et 8b, en fonction de la largeur de la truie, sont matérialisées par les flèches F sur les figures 2 et 3.

Les côtés basculants 8a et 8b peuvent pivoter entre une position extrême sensiblement verticale correspondant à la position debout de la truie (cf. figure 3) et une position extrême inclinée correspondant à la position couchée de la truie (cf.figure 4), les mouvements de pivotement des côtés 8a et 8b étant assurés du fait du mouvement de la truie.

Les côtés basculants 8a et 8b sont reliés chacun à un amortisseur 19a et 19b à effets dissymétriques pour ralentir le mouvement de pivotement du côté basculant correspondant de la position verticale à la position inclinée, sans ralentir le mouvement de pivotement inverse. Ainsi, dès que la truie veut se coucher, la pression qu'elle imprime aux côtés basculants 8a et 8b par le mouvement de son corps, provoque le basculement de ces côtés dont la rotation est ralentie par l'effet des amortisseurs 19a et 19b. Ce ralentissement donne suffisamment de temps aux porcelets de s'éloigner du ventre de leur mère et ne pas être écrasés ou étouffés par celle-ci lorsqu'elle se trouvera en position couchée. On remarquera que dans la position d'allaitement (figure 4) les côtés basculants 8a et 8b se rejoignent presque à leur extrémité supérieure, tandis que leur extrémité inférieure dégage une hauteur suffisante en favorisant l'accessibilité aux mamelles.

On remarquera en effet que la hauteur H dégagée en position inclinée est nettement supérieure à la hauteur h dégagée en position verticale (cf.figure 4).

On décrira maintenant plus particulièrement le montage de l'amortisseur 19b en se référant à la figure 5.

L'amortisseur 19b est un vérin hydraulique dont le corps est articulé autour d'un axe 20b sur un support 21b solidaire du tube coulissant 17b. L'extrémité de la tige 22b de l'amortisseur est relié par l'intermédiaire d'une tête de bielle 23b à un bras de levier 24b soudé sur le côté 8b. Comme représenté sur la figure 5, la cage comporte en outre des butées réglables constituées par deux vis de réglage 25 et 26 fixées respectivement sur la portion de tube 18b et sur le support 21b pour limiter le mouvement de pivotement du bras de levier 24b et donc du côté basculant 8b. La vis 26 fournit le réglage de la position verticale, tandis que la vis 26 fournit le réglage de la position inclinée.

Il en résulte que le mouvement de pivotement des côtés basculants de la position verticale à la position inclinée est ralenti par l'effet des amortisseurs. Cette lenteur imposée à la truie permet alors aux porcelets de se dégager de dessous leur mère dès le premier contact. Le mouvement inverse, c'est-à-dire le mouvement de pivotement de la position inclinée à la position verticale, n'est pas ralenti, de façon à permettre la remise debout de l'animal sans gêne particulière.

La cage de mise-bas de l'invention peut être utilisée dans tous les cas où le rapport de taille entre une mère et les petits qu'elle doit allaiter est tel qu'un risque d'écrasement se révèle fréquent compte tenu de la difficulté qu'éprouve l'animal à effectuer certains mouvements. Cette cage est particulièrement adaptée aux élevages de porcs où des accidents
sont fréquents, la surveillance humaine ne pouvant
être exercée de façon efficace et permanente, compte
tenu du nombre important d'animaux que comporte un
élevage industriel.

On remarquera de plus que les côtés basculants
peuvent être montés, sans modification importante, sur
une cage à bâti fixe déjà existante.

REVENDICATIONS

1) Cage de mise-bas pour truie attachée, du type comportant un bâti de cage fixe (1) et deux côtés basculants (8a, 8b) formant barrière de protection et montés chacun à pivotement autour d'un axe horizontal (AA', BB') entre une position extrême verticale et une position extrême inclinée, caractérisée par le fait que l'axe de pivotement (AA', BB') est situé dans la région centrale par rapport à la hauteur verticale du côté basculant (8a, 8b).

2) Cage de mise-bas selon la revendication 1, caractérisée par le fait que l'axe de pivotement (AA', BB') est situé sensiblement au tiers de la hauteur verticale du côté basculant (8a, 8b), en partant de l'extrémité inférieure dudit côté.

3) Cage de mise-bas selon l'une des revendications 1 et 2, caractérisée par le fait que l'axe de pivotement (AA', BB') est situé, par rapport au sol de la cage, à une hauteur voisine de la mi-hauteur de la truie.

4) Cage de mise-bas selon l'une des revendications 1 à 3, caractérisée par le fait que le côté basculant (8a, 8b) est relié à un amortisseur (19a, 19b) à effets dissymétriques pour ralentir le mouvement de pivotement du côté basculant (8a, 8b) de la position verticale à la position inclinée, sans ralentir le mouvement de pivotement inverse.

5) Cage de mise-bas selon la revendication 4, caractérisée par le fait que l'amortisseur (19a, 19b) est un vérin hydraulique dont la tige (22a, 22b) est articulée sur un bras de levier (24a, 24b) solidaire du côté basculant (8a, 8b) correspondant.

6) Cage de mise-bas selon la revendication 5, caractérisée par le fait qu'elle comporte des butées réglables (25, 26) associées à chaque bras de levier (24a, 24b) pour régler les deux positions extrêmes du côté basculant (8a, 8b) correspondant.

0045703

1/3

_Fig:1_

_Fig:2_

0045703

FIG:3

4

1

F    F

19a    19b

22a    22b

18a    18b

24a    24b

AA'    BB'

8a    8b

5    5

FIG:4

4

1

19a    19b

22a    22b

8a    8b

24a    24b

18a    18b

AA'    BB'

5    5

H

h

**FIG:5**

## 0045703

**Office européen des brevets**

### RAPPORT DE RECHERCHE EUROPEENNE

Numéro de la demande

EP 81 40 1296

| Catégorie | DOCUMENTS CONSIDERES COMME PERTINENTS | | CLASSEMENT DE LA DEMANDE (Int. Cl.³) |
|---|---|---|---|
| | Citation du document avec indication, en cas de besoin, des parties pertinentes | Revendication concernée | |
| | FR - A - 2 140 045 (W. KOHNE)  * Page 5, paragraphe 1 à page 6, paragraphe 2; figures 1-3 *  --- | 1-3,6 | A 01 K 1/02 |
| | US - A - 3 106 188 (P.H. McMURRAY)  * Colonne 2, lignes 45-62; colonne 3, lignes 32-48; figures 1, 3 et 4 **  --- | 1-4,6 | |
| | DE - A - 2 136 330 (A.E. DOSSCHE)  * Page 2, paragraphe 4 à page 3, paragraphe 1; page 7, paragraphe 2 à page 3, paragraphe 1; figures 2 et 3 *  --- | 1-3 | **DOMAINES TECHNIQUES RECHERCHES (Int. Cl.³)**  A 01 K |
| A | US - A - 4 145 993 (D. NOTARIANNI et al.)  --------- | | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 05.10.1981 | NEHRDICH |

OEB Form 1503.1   06.78